# EUROPÄISCHE PATENTSCHRIFT

(11) **EP 3 536 655 B1**
(45) Veröffentlichungstag und Bekanntmachung des Hinweises auf die Patenterteilung: **05.08.2020**
(21) Anmeldenummer: 19160885.0
(22) Anmeldetag: 05.03.2019
(51) Int. Cl.: B66F 9/075, B62D 1/18

(54) **FLURFÖRDERZEUG MIT EINER FAHRERKABINE UND EINER LENKEINHEIT**
INDUSTRIAL TRUCK WITH A DRIVER'S CAB AND A STEERING UNIT
CHARIOT DE MANUTENTION DOTÉ D'UNE CABINE DE CONDUCTEUR ET D'UNE UNITÉ DE DIRECTION

(30) Priorität: 08.03.2018 DE 102018105409
(43) Veröffentlichungstag der Anmeldung: 11.09.2019
(73) Patentinhaber: Jungheinrich Aktiengesellschaft, 22047 Hamburg (DE)
(72) Erfinder: HEUSINGER, Sebastian, 22397 Hamburg (DE)
(74) Vertreter: Hauck Patentanwaltspartnerschaft mbB

(56) Entgegenhaltungen:
- EP-A1- 2 857 280
- EP-A2- 1 857 404
- DE-A1- 10 250 905

## Beschreibung

Die vorliegende Erfindung betrifft ein Flurförderzeug, das mit einer Fahrerkabine ausgestattet ist, in der eine Lenkeinheit mit einem Lenkrad und mit weiteren Bedienelementen vorgesehen ist. Die weiteren Bedienelemente umfassen hierbei nicht notwendig sämtliche Bedienelemente des Flurförderzeugs, sondern können nur einen Teil der Bedienelemente sowie eine oder mehrere Anzeigen für das Flurförderzeug beinhalten.

Aus dem Stand der Technik ist bekannt, ein Lenkrad und weitere Bedienelemente in einer Lenkeinheit zusammenzufassen, die als ein Modul einheitlich in das Fahrzeug und die Fahrerkabine montiert werden kann. Auch ist im Stand der Technik bekannt, die Lenkeinheit in ihrer Höhe an eine gewünschte Bediensituation anzupassen und so eine ergonomische Bedienung des Flurförderzeugs sicherzustellen. Nachteilig an einer höhenverstellbaren Lenkeinheit ist, dass diese mit einer Vielzahl von zusätzlichen Bauelementen und Einbaumodulen versehen ist, so dass die Montage in dem Flurförderzeug aufwendig ist.

Aus EP 2 857 280 A1 ist ein Flurförderzeug gemäß dem Oberbegriff des Anspruchs 1 mit einem justierbaren Lenkrad bekannt geworden. Die Lenksäule ist teleskopierbar ausgestaltet und lässt sich in der gewünschten Position arretieren.

Die DE 102 50 905 A1 offenbart ein Lenkrad für ein Flurförderzeug welches sich entlang einer vorgegebenen Führung verstellen lässt. Die Führung ist dabei so ausgestaltet, dass sich die Neigung des Lenkrads bei einer Höhenverstellung zum Fahrer hin verändert.

In der EP 1 857 404 A2 wird eine Bedienkonsole für ein Flurförderzeug offenbart, welches um eine Neigungsachse schwenkbar angeordnet ist. Eine blockierbare Gasfeder arretiert die Bedienkonsole in der gewählten Position, wobei sich die Gasfeder durch Betätigung eines Auslösers freigeben lässt um die Bedienkonsole in eine neue Position zu schwenken.

Der Erfindung liegt die technische Aufgabe zugrunde, ein Flurförderzeug mit einer Fahrerkabine bereitzustellen, in der eine Lenkeinheit mit einem Lenkrad und weiteren Bedienelementen in einfacher Art und Weise an eine ergonomisch vorgesehene und gewünschte Situation angepasst werden kann.

Die erfindungsgemäße Aufgabe wird durch ein Flurförderzeug mit den Merkmalen aus Anspruch 1 sowie ein Flurförderzeug mit den Merkmalen aus Anspruch 6 gelöst. Vorteilhafte Ausgestaltungen bilden die Gegenstände der Unteransprüche.

Das erfindungsgemäße Flurförderzeug ist ein Flurförderzeug, das mit einer Fahrerkabine ausgestattet ist, in der eine Lenkeinheit mit einem Lenkrad und einem weiteren Bedienelement vorgesehen ist. Die Lenkeinheit bildet ein einheitliches Modul, das einheitlich in der Fahrerkabine verbaut wird. Um die Lenkeinheit zu verbauen, ist eine Lenkkonsole vorgesehen, die eine Grundplatte und ein von der Grundplatte abstehendes Profil aufweist. Das Profil kann beispielsweise als ein Vierkantprofil oder ein stabförmiges Profil ausgebildet sein. Die Lenkeinheit wird auf dem Profil angeordnet und auf diese Weise über die Grundplatte der Lenkkonsole in der Fahrerkabine montiert. Ferner sind Befestigungsmittel zur Anbringung einer Adaptereinheit in der Fahrerkabine vorgesehen. Die Adaptereinheit ist im montierten Zustand mit der Lenkkonsole verbunden. Die Adaptereinheit wird in einer vordefinierten Höhe in der Fahrerkabine montiert und legt somit die montierte Höhe der Lenkkonsole fest. Die Adaptereinheit weist eine mit Bohrungen versehene Adapterplatte auf, die in mindestens zwei verschiedenen Höhen an den Befestigungsmitteln anbringbar ist. Erfindungsgemäß ist der Aufbau so vorgesehen, dass Befestigungsmittel zur Anbringung der Adaptereinheit in der Fahrerkabine montiert sind. Diese Befestigungsmittel sind unabhängig von der gewünschten Höhe für die Lenkeinheit in der Fahrerkabine montiert. Auf die Befestigungsmittel wird eine Adaptereinheit mit einer Adapterplatte in unterschiedlichen Höhen montiert. Die Adaptereinheit wird mit der Lenkkonsole verbunden, die wiederum die Lenkeinheit trägt.

Der besondere Vorteil des in dieser Weise aufgebauten Flurförderzeugs mit seiner in der Höhe verstellbaren Lenkeinheit liegt darin, dass mit der Lenkeinheit, der Lenkkonsole, den Befestigungsmitteln sowie der Adaptereinheit stets gleiche Module in dem Aufbau des Flurförderzeugs verwendet werden können, ohne hier spezielle Abweichungen für unterschiedliche Höhen der Lenkeinheit vorzunehmen.

Durch die Verwendung einer Adaptereinheit mit einer Adapterplatte, die in mindestens zwei verschiedenen Höhen an dem Befestigungsmittel anbringbar ist, entsteht eine stufige Höhenverstellung. Bevorzugt ist in einer Weiterbildung der stufigen Höhenverstellung vorgesehen, dass die Adapterplatte mindestens einen Satz von Bohrungen aufweist, die verschiedene Höhe besitzen und im Zusammenspiel mit dem Befestigungsmittel die Montage in verschiedenen Höhen erlauben. Jeder Satz von Bohrungen ist dabei einem Befestigungsmittel, wie beispielsweise einem in der Fahrerkabine angebrachten Schweißbolzen zugeordnet. Mehrere Bohrungen erlauben es, die Adapterplatte in unterschiedlichen Höhen anzubringen.

In einer bevorzugten Weiterbildung weist die Adapterplatte für jeden Satz von Bohrungen eine Langvertiefung auf. Am Grund der Langvertiefung ist jeweils der Satz von Bohrungen angeordnet, so dass die Höheneinstellung der Adapterplatte stets innerhalb einer Langvertiefung erfolgt. Die Bohrung zur Aufnahme der Befestigungsmittel sind bevorzugt deshalb in einer Vertiefung bzw. in einer Langvertiefung angeordnet, weil so eine auf das Befestigungsmittel aufgesetzte Mutter oder dergleichen in der Adapterplatte versenkt ist und nicht aus dieser vorsteht. Indem die Muttern oder die sonstigen mit dem Befestigungsmittel zusammenwirkenden Elemente in der Adapterplatte versenkt sind, kann die Lenkkonsole ohne weitere Umstände flächig auf die befestigte Adapterplatte montiert werden.

Bevorzugt sind eine, zwei oder mehr Langvertiefungen übereinander in der Adapterplatte angeordnet. Durch eine oder mehrere Langvertiefungen können Befestigungsmittel in entsprechender Anzahl zur Montage der Adapterplatte und damit letztendlich zur Montage der Lenkeinheit eingesetzt werden. Grundsätzlich kann eine Landvertiefung ausreichen, zwei oder drei übereinander angeordnete Langvertiefungen können in einer vertikalen Linie übereinander angeordnet sein oder auch seitlich zueinander versetzt übereinander angeordnet sein. Bevorzugt weist die Adapterplatte mehrere Bohrungen zur Verbindung mit der Lenkkonsole auf, wodurch eine einfache Anbringung der Lenkkonsole an der Adapterplatte möglich ist.

Die erfindungsgemäße Aufgabe wird ebenfalls durch ein Flurförderzeug mit den Merkmalen aus Anspruch 6 gelöst. Das erfindungsgemäße Flurförderzeug besitzt dabei eine Fahrerkabine, in der eine Lenkeinheit mit einem Lenkrad und weiteren Bedienelementen vorgesehen ist. Die Lenkeinheit ist ein in sich geschlossenes Modul, das in einem Stück an einer Lenkkonsole montiert werden kann. Die Lenkkonsole besitzt wiederum eine Grundplatte und ein von der Grundplatte abstehendes Profil, bei dem es sich beispielsweise um ein Vierkantprofil handeln kann. Die Lenkeinheit wird für ihre Montage auf dem abstehenden Profil der Lenkkonsole angeordnet.

Erfindungsgemäß sind ferner Befestigungsmittel in der Fahrerkabine vorgesehen, die vorgesehen und bestimmt sind, eine Adaptereinheit anzubringen. Die Adaptereinheit wird in einer definierten Höhe in der Fahrerkabine an dem Befestigungsmittel angebracht. Die Adaptereinheit ist erfindungsgemäß als eine mit Bohrungen versehene Kugelschiene ausgebildet, an der die Lenkkonsole über mindestens ein entlang der Kugelschiene bewegliches Element anbringbar ist. Die Verwendung einer Adaptereinheit mit einer Kugelschiene, entlang der ein bewegliches Element verschieblich befestigt ist, erlaubt eine stufenlose Höhenverstellung der Lenkkonsole und damit auch der Lenkeinheit. Ein besonderer Vorzug dieser in der Höhe stufenlos verstellbaren Lenkeinheit besteht darin, dass eine Vielzahl von Bauelementen und Modulen identisch mit der stufigen Höheneinstellung ausgebildet ist. Lediglich die Adapterplatte zur Anbringung an den fahrzeugseitig vorgesehenen Befestigungsmitteln wird gegen eine Kugelschiene und die an dieser verfahrbaren Elemente ausgetauscht. Alle weiteren Elemente bleiben identisch. Die Kugelschiene ist als ein längliches Profil ausgebildet, das beispielsweise seitlich mit vertieften Kugelbahnen ausgestattet ist, wobei das bewegliche Elemente bevorzugt mit seinen Kugeln in den Kugelbahnen laufend angeordnet. Grundsätzlich können auch andere bewegliche Elemente ohne Kugel oder Gleitschlitten vorgesehen sein.

Die vorstehende Ausgestaltung betrifft eine stufenlose Höhenverstellung durch eine Kugelschiene mit daran beweglichen Elementen. Sowohl die stufige Höhenverstellung als auch die stufenlose Höhenverstellung besitzen einen modularen Aufbau, der in einfacher Weise mit wenigen unterschiedlichen Bauteilen die Montage erlaubt.

In einer bevorzugten Ausgestaltung der stufenlosen Höhenverstellung ist das mindestens eine bewegliche Element als ein Laufwagen ausgebildet, der an der Kugelschiene gehalten und entlang dieser verschieblich ist. Der Laufwagen gestattet mit einfachen Mitteln und ohne großen Kraftaufwand eine Höhenverstellung des beweglichen Elements an der montierten Kugelschiene. An den Enden der Kugelschiene kann zudem bevorzugt noch eine Sicherung vorgesehen sein, die ein Hinausschieben des Laufwagens über die Kugelschiene verhindert.

In einer bevorzugten Ausgestaltung ist die Lenkkonsole mit dem Laufwagen verbunden und mit diesem entlang der Kugelschiene verschieblich. Bevorzugt ist die Verbindung dabei so ausgestaltet, dass die identische Lenkkonsole, wie auch bei der stufigen Höhenverstellung, vorgesehen ist und entsprechend auf den Laufwagen montiert werden kann.

Die stufenlose Höhenverstellung arbeitet bevorzugt mit einem Gasdämpfer, der mit einem Ende in der Fahrerkabine festgelegt ist und mit seinem anderen Ende an der Lenkkonsole oder einem Laufwagen angreift. Der Gasdämpfer kann dabei als ein stufenlos blockierbarer Gasdämpfer ausgebildet sein, der in seinem gelösten Zustand das Eigengewicht von Lenkkonsole und Lenkeinheit trägt, ohne nachzugeben. Erst durch ein Heben und Senken, beispielsweise der Lenkeinheit, wird dieser angepasst und verlängert oder verkürzt sich entsprechend. Bei der Festlegung des Gasdämpfers an dem Laufwagen kann noch ein Aufnahmeblech zwischen geschaltet sein, das die Anbringung erleichtert.

Für die stufenlose Höhenverstellung ebenso wie für die stufige Höhenverstellung gemeinsam existiert eine Reihe von bevorzugten Ausgestaltungen. Eine der gemeinsamen bevorzugten Ausgestaltung sieht vor, dass die Lenkeinheit auf dem Profil der Lenkkonsole in ihrer Position verschieblich angeordnet ist. Je nach Orientierung des Profils kann hierdurch eine Verstellung der Lenkeinheit sowohl in der Höhe als auch in der Tiefe erfolgen. Als Tiefe wird hierbei der Abstand der Lenkeinheit von der Kabinenwand oder der Kabinensäule angesehen. Für die verschiebliche Positionierung der Lenkeinheit auf dem Profil kann beispielsweise eine Feststelleinrichtung vorgesehen sein, die von einem Benutzer gelöst, ein freies Verschieben der Lenkeinheit gestattet und festgestellt, die Position der Lenkeinheit auf dem Profil der Lenkkonsole festlegt. Für diesen Verstellvorgang ist bevorzugt ein Betätigungselement an der Lenkeinheit vorgesehen, mit dem eine Verbindung zwischen Lenkeinheit und Lenkkonsole gelöst und angezogen werden kann, um die Lenkeinheit in ihrer Position auf dem Profil festzulegen.

In einer bevorzugten Ausgestaltung besitzt die Lenkeinheit ein Display, über dem Fahrer Informationen zu Betriebszuständen und Situationen an dem Flurförderzeug angezeigt werden können.

Die beiden bevorzugten Ausgestaltungen einer stufenlosen Höhenverstellung und einer stufigen Höhenverstellung werden nachfolgend an zwei Ausführungsbeispielen näher erläutert. Es zeigen:
- Fig. 1: ein erfindungsgemäßes Flurförderzeug mit einer Fahrerkabine und einem Schubmast,
- Fign. 2a,: b eine Detailansicht des erfindungsgemäßen Flurförderzeugs aus Fig. 1 mit einer Lenkeinheit in angehobener und in tieferer Position,
- Fig. 3: die Fahrerkabine des Flurförderzeugs aus Fig. 1 mit einer Kugelschiene und Laufwagen,
- Fig. 4: eine Detailansicht mit montierter Lenkkonsole und Lenkeinheit,
- Fign. 5a-c: eine Detailansicht zur Montage einer Adaptereinheit in unterschiedlicher Höhe und
- Fig. 6: die Anbringung der Lenkkonsole.

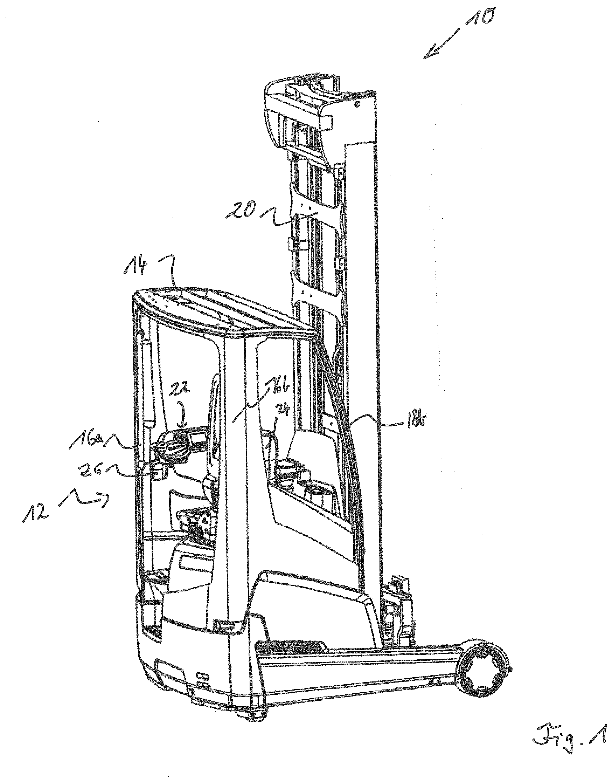

Fig. 1 zeigt ein Flurförderzeug 10 mit einer Fahrerkabine 12. Die Fahrerkabine 12 besitzt ein Fahrerschutzdach 14, das von vier Säulen getragen wird. Von den vier Säulen sind die Säulen 16a, b als A-Säulen ausgebildet, während die zum Schubmast 20 weisenden Säulen als B-Säulen 18b ausgebildet sind. In dem dargestellten Ausführungsbeispiel ist die Fahrerkabine 12 dahingehend ausgestaltet, dass zwischen den A-Säulen 16a, 16b sich ein Einstieg in die Fahrerkabine befindet. Innerhalb der Fahrerkabine 12 ist eine Lenkeinheit 22 an der A-Säule 16a angeordnet und erstreckt sich in dem Seitenbereich zwischen der A-Säule 16a und der zugehörigen B-Säule, die in der wiedergegebenen Perspektive durch die A-Säule 16b verdeckt ist. Gegenüber der Lenkeinheit 22 ist der Fahrersitz 24 angeordnet, der mit seiner Sitzfläche der Lenkeinheit 22 zugewandt ist. In Fig. 1 ist ebenfalls ein Kabelkanal 26 zu erkennen, der unterhalb der Lenkeinheit 22 Leitungen und Kabel in das Fahrzeuginnere und damit auch zur Fahrzeugsteuerung führt.

Flurförderzeuge mit einer Fahrerkabine werden in der Regel ergonomisch abgestimmt. Hierbei ist zu berücksichtigen, dass in Bezug auf die Körpergröße mitunter deutliche Unterschiede auftreten können. Diese können einerseits im Hinblick auf die Person des Bedieners vorliegen. Andererseits im Hinblick auf die Märkte, da die Flurförderzeuge nach Möglichkeit weltweit einheitlich hergestellt werden. Hier kann beispielsweise ein Fahrzeug für den skandinavischen Markt oder für den nordamerikanischen Markt andere Anforderungen an die ergonomische Einstellung der Lenkeinheit besitzen als ein Fahrzeug, das für den asiatischen Markt vorgesehen ist.

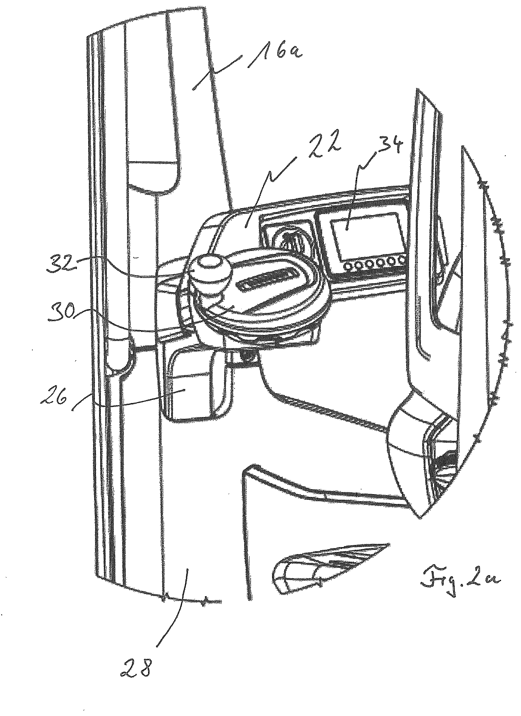

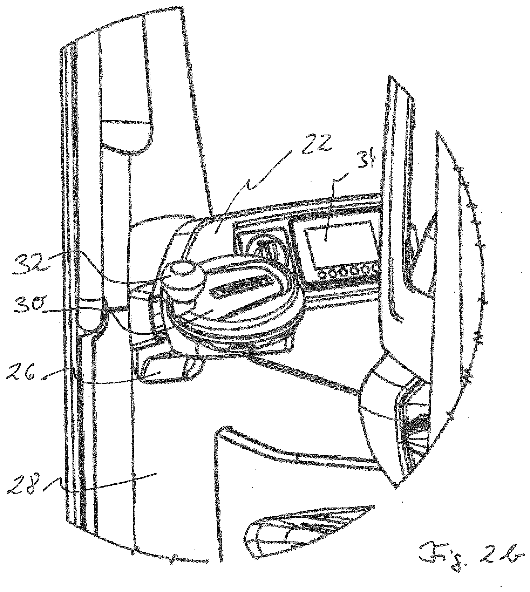

Fign. 2a und 2b zeigen die Lenkeinheit 22 in unterschiedlichen Höhen montiert. Auf der der Fahrerkabine zugewandten Seite der A-Säule 16a ist eine Verkleidung 28 montiert, die eine Aussparung für den Kabelkanal 26 besitzt. Fig. 2a zeigt die angehobene Position, in der ein guter Teil des Kabelkanals 26 in der Aussparung sichtbar ist. Fig. 2b zeigt die abgesenkte Position der Lenkeinheit 22, in der der Kabelkanal 26 weitgehend durch die Verkleidung 28 verdeckt ist. Wie in den Fign. 2a, 2b zu erkennen, besitzt die Lenkeinheit 22 ein Lenkrad 30 mit einem Lenkknauf 32. Ferner zu erkennen in den Fign. 2a, 2b ist ein Display 34, mit dem Betriebs- und Fahrzustände des Flurförderzeugs angezeigt werden können.

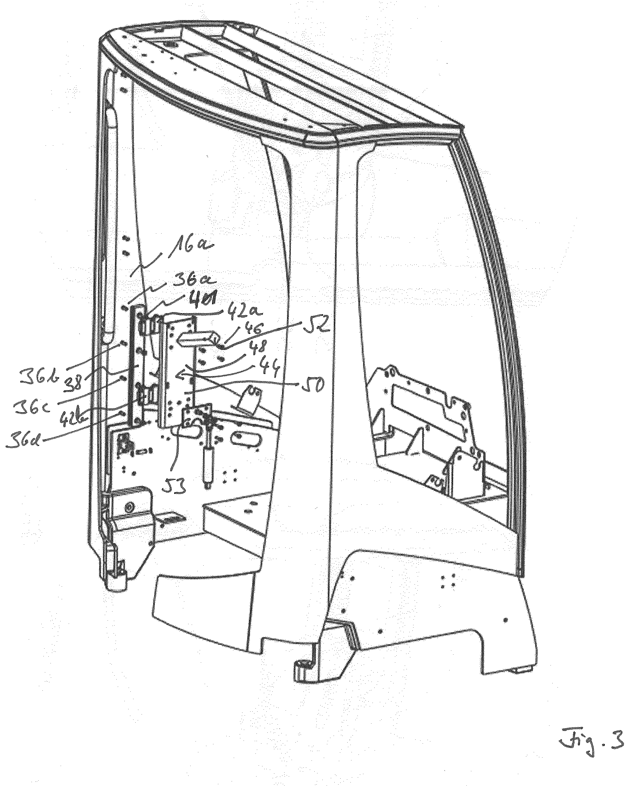

Zur besseren Übersicht zeigt Fig. 3, unter Weglassung der meisten in der Fahrerkabine verbauten Teile, den Aufbau der stufenlosen Höhenverstellung. Die A-Säule 16a besitzt vier vorstehende Bolzen 36a bis 36d. Die vorstehenden Bolzen 36a bis 36d sind beispielsweise als Schweißbolzen ausgebildet, die mit ihrem Schweißkopf an der A-Säule 16a angeschweißt sind. Auf den vier Bolzen 36a bis 36d wird die Kugelschiene 38 montiert und über Muttern 40 befestigt. Die Kugelschiene 38 ist somit an der A-Säule 16 verschraubt. Die Kugelschiene 38 besitzt hierfür Bohrungen, durch die die Bolzen 36a bis 36d vorstehen. Auf der Kugelschiene 38 sind zwei Laufwagen 42 angeordnet. Die Laufwagen 42a, 42b werden auf die Kugelschiene 38 aufgesetzt und laufen mit ihren nach innen weisenden Rädern oder Kugeln in einer seitlich an der Kugelschiene 38 vorgesehenen Laufbahn 41. Die Laufwagen sind auf diese Weise auf der Kugelschiene gesichert und können nur nach oben oder nach unten auf der Kugelschiene bewegt werden.

An den Laufwagen 42a, 42b ist eine Lenkkonsole 44 angebracht. Die Lenkkonsole 44 wird mit ihrer Grundplatte 48 über zwei Sätze von jeweils vier Schrauben 46 an den Laufwagen 42a, 42b montiert. Die Lenkkonsole 44 besteht hierbei aus einer Grundplatte 50, auf der ein vorstehendes Vierkantprofil 52 angeordnet ist.

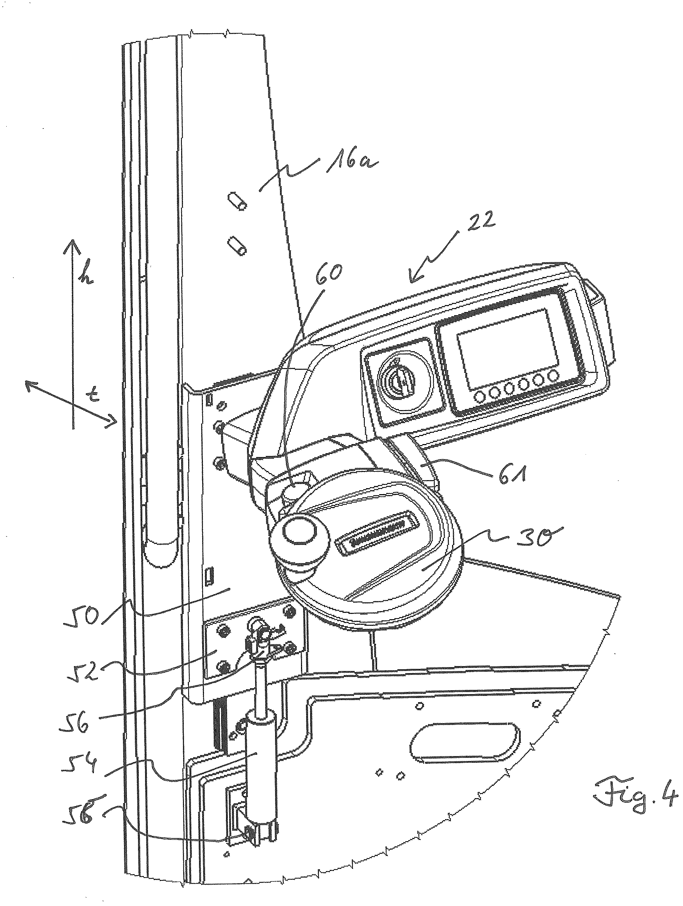

Fig. 4 zeigt die fertigmontierte Anordnung an der A-Säule 16a. Zu erkennen ist die Kugelschiene 38, auf der die Grundplatte 50 der Lenkkonsole 44 über die Laufwagen montiert ist. Die Grundplatte 50 der Lenkkonsole 44 besitzt eine Befestigungsplatte 53, an der ein Gasdämpfer 54 angreift. Der Gasdämpfer 54 besitzt einen Kopf 56, der mit einem Verstellmechanismus (nicht dargestellt) ausgestattet ist, um die feststellende Position des Gasdämpfers 54 zu lösen. An seinem gegenüberliegenden Ende ist der Gasdämpfer 54 durch ein Montageelement 58 in der Fahrerkabine montiert.

Die Lenkeinheit 22 ist auf das vorstehende Vierkantprofil 52 der Lenkkonsole aufgesetzt. Die Lenkeinheit 22 ist entlang der Längsrichtung des Vierkantprofils 52 verschieblich angeordnet und kann so in der Höhe h und in der Tiefe t verstellt werden. Zur Verstellung der Lenkeinheit 22 ist hinter dem Lenkrad 30 ein Betätigungsknopf 60 vorgesehen. Dieser kann gedrückt werden, um die Lenkeinheit in Höhe h über die Kugelschiene verschieben zu können. Für die Verstellung entlang des Vierkantprofils 52 (schräg auf den Fahrer zu) ist ein Klemmelement 61 vorgesehen, mit dem die Lenkeinheit auf dem Vierkantprofil 52 festgesetzt oder gelöst werden kann.

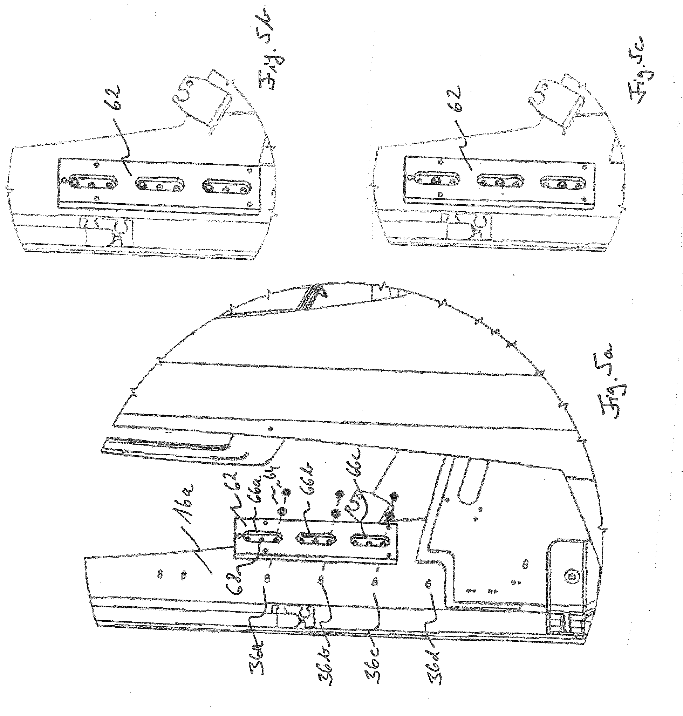

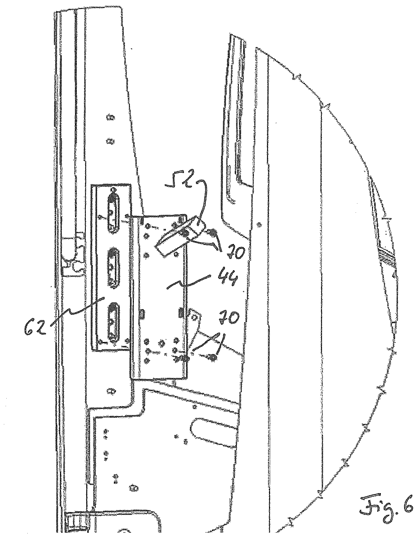

Fign. 5a bis 5c und 6 erläutern näher den Aufbau der gestuften Höhenverstellung. Fig. 5a zeigt erneut die A-Säule 16a mit den vorstehenden Befestigungsmitteln 36a, 36b, 36c, 36d. Fig. 5a zeigt, wie bei der stufigen Höhenverstellung die Adapterplatte 62 mit Mutter und Unterlegring 64 auf die vorstehenden Bolzen 36a, b und 36c montiert wird. Die Adapterplatte 62 besitzt drei Langvertiefungen 66a, 66b, 66c. Jede der Langvertiefungen besitzt drei Bohrungen 68 an ihrem Grund. Allein bezogen auf die vorstehenden Befestigungsbolzen 36a bis 36c erlauben die drei Bohrungen 68 in den Langvertiefungen 66a - 66c die Montage der Adapterplatte 62 in drei verschiedenen Höhen. Wie die Abfolge der Fign. 5a, 5b und 5c zeigt, kann auf diese Art und Weise die Adapterplatte 62 in ihrer höchsten Position (Fig. 5a), in ihrer tiefsten Position (Fig. 5b) oder in ihrer mittleren Position (Fig. 5c) montiert werden. Selbstverständlich bestehen noch einmal drei verschiedene Höhenstufen, wenn die Befestigungsmittel 36b, 36c, 36d verwendet werden.

Fig. 6 zeigt die Montage der Lenkkonsole 44 an der Adapterplatte 62. Die Lenkkonsole 44 wird über vier Schrauben 70 mit entsprechenden Bohrungen in der Adapterplatte 62 verschraubt. Die Langvertiefungen 66a bis 66c sind dabei derart ausgebildet, dass eine Mutter auf den Befestigungsbolzen 36a bis 36c nicht aus der Adapterplatte 62 vorsteht. Die Lenkkonsole 44 besitzt ein vorstehendes Profil 52, das unter einem Winkel gegenüber der Grundplatte vorsteht. Wichtig für das Verständnis der Erfindung ist, dass die Lenkkonsole 44 identisch mit der Lenkkonsole 44 aus Fig. 3 ist.

Das erfindungsgemäße Flurförderzeug bietet die Möglichkeit zur ergonomischen Einstellung der Lenkradhöhe, wodurch eine Anpassung an unterschiedliche Märkte in verschiedenen Regionen der Welt und für unterschiedliche Perzentile (5%-Frau/95%-Mann) vorgenommen werden kann. Der modulare Aufbau schafft eine kostengünstige Lösung und eine komfortable Lösung durch Übernahme der Hauptkomponente, bestehend aus Lenkeinheit, Lenkkonsole sowie Befestigungsmittel an der Kabinensäule. Besonders vorteilhaft ist, dass durch das Zusammenspiel von Lenkkonsole und Lenkeinheit auch eine Höhen- und Längsverstellung gleichzeitig erfolgen kann.

### Bezugszeichenliste

- 10: Flurförderzeug
- 12: Fahrerkabine
- 14: Fahrerschutzdach
- 16a,b: A-Säulen
- 18b: B-Säulen
- 20: Schubmast
- 22: Lenkeinheit
- 24: Fahrersitz
- 26: Kabelkanal
- 28: Verkleidung
- 30: Lenkrad
- 32: Lenkknauf
- 34: Display
- 36a-d: Bolzen
- 38: Kugelschiene
- 40: Muttern
- 41: Laufbahn
- 42a,b: Laufwagen
- 44: Lenkkonsole
- 46: Schrauben
- 48: Grundplatte
- 50: Grundplatte
- 52: Vierkantprofil
- 53: Befestigungsplatte
- 54: Gasdämpfer
- 56: Kopf
- 58: Montageelement
- 60: Betätigungsknopf
- 61: Klemmelement
- 62: Adapterplatte
- 64: Unterlegring
- 66a-c: Langvertiefungen
- 68: Bohrungen
- 70: Schrauben

## Patentansprüche

1. Flurförderzeug mit einer Fahrerkabine, in der eine Lenkeinheit (22) mit einem Lenkrad (30) und weiteren Bedienelementen (34) vorgesehen ist, mit:
- einer Lenkkonsole (44), die eine Grundplatte (48) und ein von der Grundplatte (48) abstehendes Profil (52) aufweist, wobei die Lenkeinheit (22) auf dem Profil (52) angeordnet ist, und
- Befestigungsmitteln zur Anbringung einer Adaptereinheit (62) in der Fahrerkabine (12), wobei die Adaptereinheit (62) in einer definierten Höhe in der Fahrerkabine (12) montiert ist und mit der Lenkkonsole (44) verbunden ist, und **dadurch gekennzeichnet, dass**
- die Adaptereinheit (62) als eine mit Bohrungen versehene Adapterplatte ausgebildet ist, die in mindestens zwei Höhen an den Befestigungsmitteln anbringbar ist.

2. Flurförderzeug nach Anspruch 1, **dadurch gekennzeichnet, dass** die Adapterplatte (62) mindestens einen Satz von Bohrungen (68) aufweist, die verschiedene Höhen besitzen und im Zusammenspiel mit den Befestigungsmitteln die Montage in verschiedenen Höhen erlauben.

3. Flurförderzeug nach Anspruch 2, **dadurch gekennzeichnet, dass** die Adapterplatte (62) für jeden Satz von Bohrungen (68) eine Langvertiefung (66) aufweist.

4. Flurförderzeug nach Anspruch 3, **dadurch gekennzeichnet, dass** zwei oder mehr Langvertiefungen (66) übereinander in der Adapterplatte (62) angeordnet sind.

5. Flurförderzeug nach einem der Ansprüche 1 bis 4, **dadurch gekennzeichnet, dass** die Adapterplatte (62) mehrere Bohrungen (68) zur Verbindung mit der Lenkkonsole (44) aufweist.

6. Flurförderzeug mit einer Fahrerkabine, in der eine Lenkeinheit (22) mit einem Lenkrad (30) und weiteren Bedienelementen (34) vorgesehen ist, mit
- einer Lenkkonsole (44), die eine Grundplatte (48) und ein von der Grundplatte (48) abstehendes Profil (52) aufweist, wobei die Lenkeinheit (22) auf dem Profil (52) angeordnet ist, und
- Befestigungsmitteln zur Anbringung einer Adaptereinheit (62) in der Fahrerkabine (12), wobei die Adaptereinheit (62) in einer definierten Höhe in der Fahrerkabine (12) montierbar ist und mit der Lenkkonsole (44) verbunden ist, und **dadurch gekennzeichnet, dass**
- die Adaptereinheit (62) als eine mit Bohrungen versehene Kugelschiene (38) ausgebildet ist, an der die Lenkkonsole über mindestens ein entlang der Kugelschiene bewegliches Element anbringbar ist.

7. Flurförderzeug nach Anspruch 6, **dadurch gekennzeichnet, dass** mindestens ein bewegliches Element als ein Laufwagen (42) ausgebildet ist, der an der Kugelschiene (38) gehalten und entlang dieser verschieblich ist.

8. Flurförderzeug nach Anspruch 6 oder 7, **dadurch gekennzeichnet, dass** die Lenkkonsole (44) mit dem Laufwagen (42) verbunden ist und mit diesem entlang der Kugelschiene (38) verschieblich ist.

9. Flurförderzeug nach Anspruch 6 bis 8, **dadurch gekennzeichnet, dass** ein Gasdämpfer (54) vorgesehen ist, der mit einem Ende in der Fahrerkabine festgelegt ist und mit seinem anderen Ende an der Lenkkonsole (44) oder einem Laufwagen angreift.

10. Flurförderzeug nach einem der Ansprüche 1 bis 9, **dadurch gekennzeichnet, dass** die Lenkeinheit (22) auf dem Profil der Lenkkonsole (44) in ihrer Position verschieblich angeordnet ist.

11. Flurförderzeug nach einem der Ansprüche 1 bis 10, **dadurch gekennzeichnet, dass** die Lenkeinheit (22) ein Klemmelement (61) aufweist, mit dem eine Verbindung zwischen Lenkeinheit (22) und Lenkkonsole (44) gelöst und wieder angezogen werden kann, um die Lenkeinheit (22) in ihrer Position auf dem Profil (52) festzulegen.

12. Flurförderzeug nach einem der vorhergehenden Ansprüche, **dadurch gekennzeichnet, dass** die Lenkeinheit (22) einen Betätigungsknopf (60) aufweist, mit dem Gasdämpfer für eine Höhenverstellung der Lenkeinheit lös- und feststellbar ist.

## Claims

1. Industrial truck with a driver's cab in which a steering unit (22) with a steering wheel (30) and further operating elements (34) is provided, with:
- a steering console (44) comprising a base plate (48) and a profile (52) projecting from the base plate (48), wherein the steering unit (22) is arranged on the profile (52), and
- Fastening means for mounting an adapter unit (62) in the driver's cab (12), wherein the adapter unit (62) is mounted at a defined height in the driver's cab (12) and is connected to the steering console (44), and **characterized in that**
- the adapter unit (62) is designed as an adapter plate provided with boreholes, which can be attached to the fastening means at at least two heights.

2. Industrial truck according to claim 1, **characterized in that** the adapter plate (62) comprises at least one set of boreholes (68) which have different heights and, in interaction with the fastening means, allow for mounting at different heights.

3. Industrial truck according to claim 2, **characterized in that** the adapter plate (62) has a long recess (66) for each set of boreholes (68).

4. Industrial truck according to claim 3, **characterized in that** two or more long recesses (66) are arranged one above the other in the adapter plate (62).

5. Industrial truck according to one of claims 1 to 4, **characterized in that** the adapter plate (62) has a plurality of boreholes (68) for connection to the steering console (44).

6. Industrial truck with a driver's cab in which a steering unit (22) with a steering wheel (30) and further operating elements (34) is provided, with
- a steering console (44) comprising a base plate (48) and a profile (52) projecting from the base plate (48), wherein the steering unit (22) is arranged on the profile (52), and
- Fastening means for mounting an adapter unit (62) in the driver's cab (12), wherein the adapter unit (62) is mounted at a defined height in the driver's cab (12) and is connected to the steering console (44), and **characterized in that**
- the adapter unit (62) is designed as a ball rail (38) provided with boreholes, to which the steering console can be attached via at least one element movable along the ball rail.

7. Industrial truck according to claim 6, **characterized in that** at least one movable element is designed as a trolley (42) which is held on the ball rail (38) and is displaceable along the latter.

8. Industrial truck according to claim 6 or 7, **characterized in that** the steering console (44) is connected to the trolley (42) and is displaceable along the ball rail (38) with the latter.

9. Industrial truck according to claims 6 to 8, **characterized in that** a gas damper (54) is provided which is fixed with one end in the driver's cab and engages with its other end with the steering console (44) or a trolley.

10. Industrial truck according to any one of claims 1 to 9, **characterized in that** the steering unit (22) is arranged on the profile of the steering console (44) so as to be displaceable in its position.

11. Industrial truck according to one of claims 1 to 10, **characterized in that** the steering unit (22) comprises a clamping element (61) with which a connection between steering unit (22) and steering bracket (44) can be released and tightened again in order to fix the steering unit (22) in its position on the profile (52).

12. Industrial truck according to one of the preceding claims, **characterized in that** the steering unit (22) comprises an actuating knob (60) with which the gas damper can be released and locked for a height adjustment of the steering unit.

## Revendications

1. Chariot de manutention comprenant une cabine de conducteur, dans laquelle est prévue une unité de direction (22) comprenant un volant (30) et d'autres éléments de commande (34), comprenant :
- une console de direction (44) présentant une plaque de base (48) et un profilé (52) faisant saillie à partir de la plaque de base (48), l'unité de direction (22) étant disposée sur le profilé (52), et
- des moyens de fixation pour l'installation d'une unité d'adaptateur (62) dans la cabine de conducteur (12), l'unité d'adaptateur (62) étant montée à une hauteur définie dans la cabine de conducteur (12) et reliée à la console de direction (44), **caractérisé en ce que**
- l'unité d'adaptateur (62) est réalisée comme une plaque d'adaptateur pourvue d'alésages, laquelle peut être installée au moins à deux hauteurs sur les moyens de fixation.

2. Chariot de manutention selon la revendication 1, **caractérisé en ce que** la plaque d'adaptateur (62) présente au moins un ensemble d'alésages (68) possédant différentes hauteurs et permettant le montage à différentes hauteurs en coopération avec les moyens de fixation.

3. Chariot de manutention selon la revendication 2, **caractérisé en ce que** la plaque d'adaptateur (62) présente un renfoncement allongé (66) pour chaque ensemble d'alésages (68) .

4. Chariot de manutention selon la revendication 3, **caractérisé en ce que** deux ou plusieurs renfoncements allongés (66) sont superposés dans la plaque d'adaptateur (62).

5. Chariot de manutention selon l'une des revendications 1 à 4, **caractérisé en ce que** la plaque d'adaptateur présente plusieurs alésages (68) pour l'assemblage avec la console de direction (44).

6. Chariot de manutention comprenant une cabine de conducteur, dans laquelle est prévue une unité de direction (22) comprenant un volant (30) et d'autres éléments de commande (34), comprenant
- une console de direction (44) présentant une plaque de base (48) et un profilé (52) faisant saillie à partir de la plaque de base (48), l'unité de direction (22) étant disposée sur le profilé (52), et
- des moyens de fixation pour l'installation d'une unité d'adaptateur (62) dans la cabine de conducteur (12), l'unité d'adaptateur (62) pouvant être montée à une hauteur définie dans la cabine de conducteur (12) et reliée à la console de direction (44), **caractérisé en ce que**
- l'unité d'adaptateur (62) est réalisée comme un rail sphérique (38) pourvu d'alésages sur lequel la console de direction peut être installée par le biais d'au moins un élément déplaçable le long du rail sphérique.

7. Chariot de manutention selon la revendication 6, **caractérisé en ce qu'**au moins un élément déplaçable est réalisé comme un chariot (42) maintenu sur le rail sphérique (38) et apte à coulisser le long de celui-ci.

8. Chariot de manutention selon la revendication 6 ou 7, **caractérisé en ce que** la console de direction (44) est reliée au chariot (42) et apte à coulisser avec celui-ci le long du rail sphérique (38).

9. Chariot de manutention selon les revendications 6 à 8, **caractérisé en ce qu'**il est prévu un amortisseur à gaz (54) positionné fixement dans la cabine de conducteur par une extrémité et engageant la console de direction (44) ou un chariot avec son autre extrémité.

10. Chariot de manutention selon l'une des revendications 1 à 9, **caractérisé en ce que** l'unité de direction (22) est disposée de façon coulissante dans sa position sur le profilé de la console de direction (44).

11. Chariot de manutention selon l'une des revendications 1 à 10, **caractérisé en ce que** l'unité de direction (22) présente un élément de serrage (61), avec lequel un assemblage entre l'unité de direction (22) et la console de direction (44) peut être défait et de nouveau établi, afin de fixer l'unité de direction (22) dans sa position sur le profilé (52).

12. Chariot de manutention selon l'une des revendications précédentes, **caractérisé en ce que** l'unité de direction (22) présente un bouton d'actionnement (60) permettant de détacher et de verrouiller l'amortisseur à gaz pour un réglage en hauteur de l'unité de direction.
